# EUROPÄISCHE PATENTSCHRIFT

(11) **EP 3 267 017 B1**
(45) Veröffentlichungstag und Bekanntmachung des Hinweises auf die Patenterteilung: **30.10.2024**
(21) Anmeldenummer: 17174773.6
(22) Anmeldetag: 07.06.2017
(51) Int. Cl.: F02D 41/14, F02D 13/02, F02D 19/06, F02D 19/08, F02D 19/10, F02D 41/00, F02B 25/02, F02D 19/02

(54) **VERFAHREN ZUM BETREIBEN EINES DUAL-FUEL GROSSDIESELMOTORS SOWIE GROSSDIESELMOTOR**
METHOD FOR OPERATING A DUAL FUEL LARGE DIESEL ENGINE AND LARGE DIESEL ENGINE
PROCÉDÉ DE FONCTIONNEMENT D'UN MOTEUR DIESEL DE GROSSE CYLINDRÉE DUAL-FUEL ET MOTEUR DIESEL DE GROSSE CYLINDRÉE

(30) Priorität: 05.07.2016 EP 16177876
(43) Veröffentlichungstag der Anmeldung: 10.01.2018
(73) Patentinhaber: WinGD AG, 8400 Winterthur (CH)
(72) Erfinder: Ott, Marcel, 8406 Winterthur (CH); Alder, Roland, 8405 Winterthur (CH); Akrour, Matthieu, 612-020 Busan (KR)
(74) Vertreter: IPS Irsch AG

(56) Entgegenhaltungen:
- EP-A2- 0 108 582
- WO-A1-2016/073588
- DE-A1- 102004 037 971
- DE-A1- 102011 003 687
- US-A1- 2010 318 277

## Beschreibung

Die Erfindung betrifft ein Verfahren zum Betreiben eines Dual-Fuel Grossdieselmotors, insbesondere eines längsgespülten Zweitakt-Grossdieselmotors, der in einem Flüssigmodus betreibbar ist, in welchem ein flüssiger Brennstoff zur Verbrennung in einen Zylinder eingebracht wird, und der ferner in einem Gasmodus betreibbar ist, in welchem ein Gas als Brennstoff in einen Zylinder eingebracht wird. Die Erfindung betrifft ferner einen Dual-Fuel Grossdieselmotor, der mit einem solchen Verfahren betrieben wird.

Grossdieselmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betreib, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien.

Ein weiterer wesentlicher Punkt ist seit einigen Jahren mit zunehmender Bedeutung die Qualität der Abgase, insbesondere die Stickoxid Konzentration in den Abgasen. Hier werden die rechtlichen Vorgaben und Grenzwerte für die entsprechenden Abgasgrenzwerte immer weiter verschärft. Das hat insbesondere bei Zweitakt-Grossdieselmotoren zur Folge, dass die Verbrennung des klassischen, mit Schadstoffen hoch belasteten Schweröls, aber auch die Verbrennung von Dieselöl oder anderen Brennstoffen problematischer wird, weil die Einhaltung der Abgasgrenzwerte immer schwieriger, technisch aufwändiger und damit teurer wird oder am Ende deren Einhaltung gar nicht mehr sinnvoll möglich ist.

In der Praxis besteht daher bereits seit langem das Bedürfnis nach sogenannten "Dual-Fuel Motoren", also Motoren, die mit zwei unterschiedlichen Brennstoffen betrieben werden können. In einem Gasmodus wird ein Gas, z.B. ein Erdgaswie LNG (liquefied natural gas), oder ein Gas in Form eines Autogases oder eines anderen zum Antrieb einer Brennkraftmaschine geeigneten Gases verbrannt, während in einem Flüssigmodus ein geeigneter flüssiger Brennstoff wie Benzin, Diesel, Schweröl, Alkohole, Ölderivate und deren Wassergemische, Biotreibstoffe, oder andere geeignete flüssige Brennstoffe in demselben Motor verbrannt werden können. Die Motoren können dabei sowohl Zweitakt- als auch Viertaktmotoren sein, insbesondere auch längsgespülte Zweitakt-Grossdieselmotoren.

Ein Dual-Fuel Grossdieselmotor kann also ausser im Dieselbetrieb, der durch die Selbstzündung des Brennstoffs gekennzeichnet ist, auch in einem Ottobetrieb, der durch die Fremdzündung des Brennstoffs gekennzeichnet ist, betrieben werden. Insbesondere kann die Selbstzündung des Brennstoffs auch zur Fremdzündung eines anderen Brennstoffs genutzt werden.

Im Flüssigmodus wird üblicherweise der Brennstoff direkt in den Brennraum des Zylinders eingebracht und verbrennt dort nach dem Prinzip der Selbstzündung. Im Gasmodus ist es bekannt, nach dem Otto-Prinzip das Gas im gasförmigen Zustand mit der Spülluft zu vermischen, um so im Brennraum des Zylinders ein zündfähiges Gemisch zu erzeugen. Bei diesem Niederdruckverfahren erfolgt die Zündung des Gemisches im Zylinder üblicherweise, indem im richtigen Moment eine kleine Menge flüssiger Brennstoff in den Brennraum des Zylinders oder in eine Vorkammer eingespritzt wird, die dann zur Zündung des Luft-Gas-Gemisches führt. Natürlich kann das Luft-Gas-Gemisch auch elektrisch oder auf eine andere an sich bekannte Methode fremdgezündet werden. Ein Dual-Fuel Motor kann während des Betriebs vom Gasmodus in den Flüssigmodus umgeschaltet werden und umgekehrt.

Bei einem Dual-Fuel Motor ist im Gasmodus der Vorgang der Einbringung des Brennstoffs Gas in den Brennraum des Zylinders von entscheidender Bedeutung für den zuverlässigen, schadstoffarmen und sicheren Betrieb eines solchen Motors.

Während im Flüssigmodus bzw. im Dieselbetrieb das Verhältnis aus Spülluft und flüssigem Brennstoff vergleichsweise unkritisch ist, kommt im Gasmodus insbesondere dem Einstellen des korrekten Verhältnisses von Spülluft zu Gas, dem sogenannte Luft-Gas-Verhältnis oder Luft-Kraftstoff-Verhältnis, eine entscheidende Bedeutung zu. In einem Grossdieselmotor wird die Spül- oder Ladeluft üblicherweise von einem Turbolader zur Verfügung gestellt, der einen Spül- oder Ladeluftdruck generiert, welcher von der Last des Motors und damit von der Leistung bzw. vom Drehmoment bzw. der Drehzahl des Motors abhängt. Für einen gegebenen Spülluftdruck lässt sich die Masse der Luft im Zylinder berechnen und dann für das jeweilige benötigte Antriebsmoment, welches vom Motor generiert wird, bzw. für die gewünschte Drehzahl eine geeignete Menge des gasförmigen Brennstoffs bestimmen, der für diesen Betriebszustand zu einem optimalen Verbrennungsprozess führt.

Insbesondere, wenn der Gasmodus nach dem Otto-Prinzip betrieben wird, ist die korrekte Einstellung des Luft-Gas-Verhältnisses von entscheidender Bedeutung für einen möglichst schadstoffarmen, effizienten und wirtschaftlichen Betrieb des Motors. Ist der Gasanteil zu hoch, so wird das Luft-Gas-Gemisch zu fett. Die Verbrennung des Gemischs erfolgt zu schnell oder zu früh was zu hohen mechanischen Belastungen, zum Klopfen des Motors und zu einer signifikanten Schadstofferhöhung in Abgas führen kann. Da der Verbrennungsprozess dann nicht mehr korrekt auf die Kolbenbewegung im Zylinder abgestimmt ist, führt dies unter anderem auch dazu, dass die Verbrennung teilweise gegen die Bewegung des Kolbens arbeitet.

Auch wenn die korrekte Einstellung des Luft-Gas-Verhältnisses in modernen Grossdieselmotoren unter normalen Betriebsbedingungen keine grösseren Probleme mehr darstellt, so gibt es Betriebsbedingungen, die zu erheblichen Schwierigkeiten führen können. Die EP 0 108 582 A2 offenbart, bei Begrenzung des Gas-Luft-Verhältnisses mittels zusätzlich eingespritztem flüssigen Kraftstoff die vom Hersteller spezifizierten Leistungswerte zu erreichen.

Mit normalen Betriebsbedingungen sind dabei beispielsweise solche gemeint, auf welche sich die technischen Spezifikationen eines Grossdieselmotors beziehen, wie beispielsweise seine maximale Leistung bei Volllast, seine Schadstoffemission, sein Brennstoffverbrauch usw. Diese technischen Spezifikationen beziehen sich auf Betriebsbedingungen, die in internationalen Normen (ISO) festgelegt sind, beispielsweise in der ISO 3046-1, und beispielsweise auf eine Umgebungstemperatur von 25°C.

Üblicherweise werden Grossdieselmotoren, insbesondere bevor sie in den eigentlichen Servicebetrieb übergeben werden, oder im Rahmen von Instandhaltungsarbeiten, getestet, ob sie die angegebenen Spezifikationen auch erfüllen, beispielsweise im Hinblick auf die Schadstoffemission, für die Grenzwerte von der IMO (International Maritime Organization) festgelegt sind. Oft können diese Tests aber nicht unter den oben genannten ISO-Bedingungen durchgeführt werden, was zu erheblichen Problemen führen kann.

Als ein Beispiel seien hier sogenannte tropische Bedingungen genannt, die insbesondere beim Betrieb im Gasmodus Schwierigkeiten verursachen können. Mit tropischen Bedingungen sind dabei solche Umgebungsbedingungen gemeint, die durch eine sehr hohe Temperatur und/oder durch eine sehr hohe relative Luftfeuchtigkeit der Umgebungsluft gekennzeichnet sind, beispielsweise eine Temperatur von mindestens 27°C oder auch über 30°C, oder eine relative Luftfeuchtigkeit von 30%, 40% oder sogar über 60%. Ein Beispiel für tropische Bedingungen sind eine relative Luftfeuchte von 60% und eine Lufttemperatur von 45°C. Unter solchen tropischen Bedingungen ist auch die von dem Turbolader angesaugte Luft zur Bereitstellung der Spülluft für die Zylinder sehr warm und/oder sehr feucht.

Diese warme/feuchte angesaugte Luft kann zu einer deutlichen Reduzierung des Luftmassenstroms im Turbolader führen, weil die warme Luft eine geringere Dichte aufweist und weil die feuchte Luft viel schneller zu Wasserkondensation oder Dampfbildung im Ladeluftkühler führen kann. Dieser reduzierte Massenstrom der Luft kann im Gasbetrieb, der ja sehr empfindlich auf das Luft-Gas-Verhältnis reagiert, dazu führen, dass die Gasverbrennung in einen Luftmangelbereich gerät, d.h. das Luft-Gas-Verhältnis im Zylinder sinkt und es kann passieren, dass das Luft-Gas-Gemisch zu fett wird, sodass der Grossdieselmotor in den Bereich der zu schnellen Verbrennung gerät, die zu hohen mechanischen Belastungen oder sehr hohen Schadstoffemissionen führt. Wenn bzw. bevor dies passiert, muss die Last der Grossdieselmotors zurückgenommen bzw. reduziert werden, um den Luftmangelbereich im Gasmodus zu vermeiden.

Insbesondere im Testbetrieb, bei welchem der Grossdieselmotor mit Volllast, also mit 100% seiner Last betrieben wird, kann es möglich sein, dass es zu unzulässig hohen Schadstoffemissionen im Gasbetrieb kommt. Aber auch im Servicebetrieb des Grossdieselmotors können solche ungünstigen Umgebungsbedingungen, wie beispielsweise sehr warme und/oder sehr feuchte Umgebungsluft zu erheblichen Beeinträchtigungen führen. Selbst wenn im Servicebetrieb der Grossdieselmotor üblicherweise nur sehr selten mit 100% Last, also mit Volllast, betrieben wird, so kann sehr warme und/oder sehr feuchte Umgebungsluft sogar dazu führen, dass der Grossdieselmotor nur noch mit maximal 85% oder sogar nur noch mit höchstens etwa 75% seiner nominellen Volllast betrieben werden kann, was auch unter wirtschaftlichen Aspekten nachteilig ist.

Diesem Problem widmet sich die vorliegende Erfindung.

Ausgehend von diesem Stand der Technik ist es daher eine Aufgabe der Erfindung, ein Verfahren zum Betreiben eines Dual-Fuel Grossdieselmotors vorzuschlagen, mit welchem der Grossdieselmotor auch bei ungünstigen Umgebungsbedingungen, insbesondere unter den genannten tropischen Bedingungen, im Gasmodus mit zumindest näherungsweise 100% seiner Volllast betrieben werden kann, ohne dass es dabei zu einer signifikanten Erhöhung der Schadstoffemissionen des Grossdieselmotors kommt. Ferner ist es eine Aufgabe der Erfindung, einen entsprechenden Grossdieselmotor vorzuschlagen.

Die diese Aufgabe lösenden Gegenstände der Erfindung sind durch die Merkmale des unabhängigen Patentanspruchs der jeweiligen Kategorie gekennzeichnet.

Erfindungsgemäss wird also ein Verfahren zum Betreiben eines Dual-Fuel Grossdieselmotors, insbesondere eines längsgespülten Zweitakt-Grossdieselmotors, vorgeschlagen, der in einem Flüssigmodus betreibbar ist, in welchem ein flüssiger Brennstoff zur Verbrennung in einen Zylinder eingebracht wird, und der ferner in einem Gasmodus betreibbar ist, in welchem ein Gas als Brennstoff in den Zylinder eingebracht wird, das Gas mit Spülluft vermischt wird und bei einem Luft-Gas-Verhältnis verbrannt wird, wobei während des Betriebs im Gasmodus ein Kontrollparameter überwacht wird, anhand dessen Änderungen des Luft-Gas-Verhältnisses erkennbar sind, und wobei der Grossdieselmotor in einem Leistungsausgleichsmodus betrieben wird, falls der Kontrollparameter einen Grenzwert erreicht, wobei in dem Leistungsausgleichsmodus das Luft-Gas-Verhältnis für die Verbrennung des Gases erhöht wird, wobei im Leistungsausgleichsmodus eine Zusatzmenge des flüssigen Brennstoffs zusätzlich zu dem Gas in den Brennraum eingebracht wird.

Ein wesentlicher Aspekt der Erfindung ist es somit, dass zumindest im Gasmodus ein Kontrollparameter überwacht wird, anhand dessen Änderungen des Luft-Gas Verhältnisses erkennbar sind. Durch die Überwachung dieses Kontrollparameters ist es rechtzeitig erkennbar, wenn die Gefahr besteht, dass die Verbrennung des Gases in einen Luftmangelbereich gerät, also die Gefahr einer zu schnellen Verbrennung im Zylinder besteht. Sobald der aktuelle Wert des Kontrollparameters einen Grenzwert erreicht, wird der Grossdieselmotor in einen Leistungsausgleichsmodus geschaltet, in welchem das Luft-Gas-Verhältnis im Zylinder erhöht wird. Dabei ist der Grenzwert für den Kontrollparameter so festgelegt, dass die Verbrennung des Gases sicher noch nicht im Bereich einer zu schnellen Verbrennung, also im Bereich eines zu fetten Luft-Gas-Gemisches ist. Dadurch lässt es sich gewährleisten, dass der Grossdieselmotor auch bei sehr ungünstigen Umgebungsbedingungen, insbesondere unter tropischen Bedingungen, zumindest mit näherungsweise 100% seiner nominellen Volllast betrieben werden kann, ohne dass dafür eine deutliche Erhöhung der Schadstoffemission oder eine erhöhte mechanische Belastung in Kauf genommen werden müsste.

Vorzugsweise wird als Kontrollparameter zur Aktivierung des Leistungsausgleichsmodus ein Parameter gewählt, dessen aktueller Wert im Grossdieselmotor sowieso zur Verfügung steht, oder der aus zur Verfügung stehenden Parametern ableitbar ist, oder der ohne grösseren Aufwand, insbesondere ohne zusätzlichen apparativen Aufwand, erfassbar ist. Bevorzugte und geeignete Kontrollparameter umfassen mindestens einen der folgenden Parameter: Zylinderdruck, Verhältnis aus Zylinderdruck und Kompressionsdruck (sogenannter Zündsprung), Verbrennungsgeschwindigkeit, Temperatur der angesaugten Luft am Eingang eines Turboladers zur Bereitstellung der Spülluft, Stellung des Waste-Gate-Ventils für einen Turbolader, Feuchtigkeit der angesaugten Luft am Eingang eines Turboladers zur Bereitstellung der Spülluft, Temperatur der Spülluft, die in den Zylinder eingebracht wird, aktueller Druck der Spülluft, Sauerstoffkonzentration im Abgas, Stickoxidkonzentration im Abgas.

In einer besonders bevorzugten Ausführungsform ist der Kontrollparameter zur Aktivierung des Leistungsausgleichsmodus der Zylinderdruck bei der Verbrennung des Luft-Gas-Gemisches. Dieser Druck, der auch als Zünddruck bezeichnet wird, und der den maximalen Druck angibt, der über den Arbeitszyklus gesehen im Zylinder auftritt, ist eine Grösse die typischerweise in Dual-Fuel-Grossdieselmotoren erfasst wird, zur Verfügung steht, und anhand derer Änderungen des Luft-Gas-Verhältnisses bei der Gasverbrennung besonders zuverlässig erkannt werden können.

Dabei ist es bevorzugt, wenn der Grenzwert für den Kontrollparameter der Auslegedruck des Zylinders ist. Für jeden Grossdieselmotor gibt es einen solchen Auslegedruck. Dieser gibt an, wie gross der Zylinderdruck bzw. der Zünddruck im Zylinder maximal sein darf, um einen sicheren Betrieb zu gewährleisten. Wenn also bei dieser bevorzugten Ausführungsform der Kontrollparameter Zylinderdruck den Auslegedruck als Grenzwert erreicht, wird der Leistungsausgleichsmodus aktiviert.

Eine weitere bevorzugte, weil besonders einfache, Ausführungsform ist es, wenn der Leistungsausgleichsmodus aktiviert wird, wenn die Temperatur der von einem Turbolader angesaugten Luft eine Grenztemperatur überschreitet, wobei die Grenztemperatur mindestens 27° Celsius beträgt.

Auch ist es eine bevorzugte Massnahme, wenn der Leistungsausgleichsmodus aktiviert wird, wenn die relative Feuchtigkeit der von einem Turbolader angesaugten Luft eine Grenzfeuchtigkeit überschreitet, wobei die Grenzfeuchtigkeit mindestens 40%, vorzugsweise mindestens 60%, beträgt. Auch dies stellt nämlich eine besonders einfach zu realisierende Massnahme dar.

In einer speziell bevorzugten Ausführungsform wird im Leistungsausgleichsmodus eine Zusatzmenge des flüssigen Brennstoffs zusätzlich zu dem Gas in den Brennraum eingebracht. Durch diese Massnahme lässt sich nämlich in besonders einfacher Weise das Luft-Gas-Verhältnis für die Verbrennung des Gases erhöhen. Weil ein Teil der benötigten Leistung des Motors durch die Verbrennung des flüssigen Brennstoffs generiert wird, reduziert sich die Menge an Gas, die für den jeweiligen Gasverbrennungsprozess benötigt wird. Durch diese Reduzierung der Gasmenge lässt sich das Luft-Gas-Verhältnis für die Gasverbrennung erhöhen.

Da es apparativ besonders einfach ist, wird vorzugsweise die Zusatzmenge des flüssigen Brennstoffs mittels einer Einspritzvorrichtung in den Zylinder eingebracht, welche im Flüssigmodus des Grossdieselmotors verwendet wird.

Hierbei ist es bevorzugt, wenn zunächst eine minimale Zusatzmenge des flüssigen Brennstoffs in den Zylinder eingebracht wird, und die Zusatzmenge dann schrittweise erhöht wird, bis die gewünschte Last des Grossdieselmotors erreicht ist. Das heisst, bei Aktivierung des Leistungsausgleichsmodus wird zunächst diese minimale Zusatzmenge des flüssigen Brennstoffs zusätzlich zu dem Gas in den Zylinder eingebracht. Sollte diese minimale Zusatzmenge nicht ausreichen, um die gewünschte Last des Motors zu realisieren, ohne dass dabei die Gefahr der zu schnellen Gasverbrennung (Luftmangelbereich) besteht, so wird in den nächsten Arbeitszyklen des Zylinders die Zusatzmenge des flüssigen Brennstoffs schrittweise erhöht, bis die gewünschte Last des Motors erreicht ist.

Um eine Zunahme der Schadstoffemission zu verhindern, ist es bevorzugt, wenn die Zusatzmenge des flüssigen Brennstoffs so klein wie möglich gehalten wird, und insbesondere höchstens 20 Gewichtsprozent, vorzugsweise höchstens 15 Gewichtsprozent, der Gesamtmenge des in den Zylinder eingebrachten Brennstoffs beträgt.

Insbesondere ist es bevorzugt, wenn die Zusatzmenge des flüssigen Brennstoffs im Bereich von etwa 5 bis 10 Gewichtsprozent der Gesamtmenge des in den Zylinder eingebrachten Brennstoffs liegt. Die Praxis hat überraschenderweise gezeigt, dass insbesondere mit dieser Zusatzmenge sogar eine Reduzierung der Schadstoffemission erzielt werden kann, was besonders vorteilhaft ist. Zudem ist es in sehr vielen Anwendungsfällen vollkommen ausreichend , die Zusatzmenge des flüssigen Brennstoffs auf diesen Bereich zu beschränken, um den Grossdieselmotor auch unter tropischen Bedingungen im Gasmodus mit Volllast betreiben zu können.

Gemäss einer weiteren bevorzugten Ausführungsform wird im Leistungsausgleichsmodus ein Gebläse aktiviert, mit welchem eine zusätzliche Menge an Spülluft generiert wird. Durch diese Massnahme lässt sich im Leistungsausgleichsmodus zusätzlich zu dem von dem Turbolader gelieferten Massenstrom an Spülluft mehr Spülluft generieren, wodurch das Luft-Gas-Verhältnis für die Verbrennung des Gases im Zylinder erhöht wird. Auch durch diese Massnahme ist es möglich, den Grossdieselmotor im Gasmodus selbst bei ungünstigen Umgebungsbedingungen, insbesondere tropischen Bedingungen, mit Volllast zu betreiben.

Vorzugsweise ist dabei das Gebläse ein regelbares Gebläse, mit welchen die zusätzliche Menge an Spülluft veränderbar ist. Durch das regelbare Gebläse kann das Luft-Gas-Verhältnis für die Gasverbrennung kontinuierlich vergrössert bzw. angepasst werden, sodass die Verbrennung des Gases unter den Aspekten eines möglichst geringen Verbrauchs und einer möglichst geringen Schadstoffemission optimiert werden kann.

Vorzugsweise ist das Gebläse in Serie mit einem Kompressor eines Turboladers angeordnet. Das Gebläse reduziert dabei die Druckdifferenz über den Kompressor des Turboladers, wodurch der Massenstrom der Spülluft erhöht wird. Insbesondere ist es bevorzugt, das Gebläse auf der Druckseite des Kompressors anzuordnen.

Natürlich ist es auch möglich, das Gebläse oder ein weiteres Gebläse parallel zum Kompressor des Turboladers anzuordnen.

Erfindungsgemäss wird ferner ein Dual-Fuel Grossdieselmotor, insbesondere längsgespülter Zweitakt-Grossdieselmotor, vorgeschlagen, der mit einem erfindungsgemässen Verfahren betrieben wird.

Das erfindungsgemässe Verfahren ist insbesondere auch zur Nachrüstung eines Dual-Fuel Grossdieselmotors geeignet. Da sich das erfindungsgemässe Verfahren in sehr vielen Fällen ohne grösseren zusätzlichen apparativen Aufwand realisieren lässt, ist es insbesondere auch dafür geeignet, bereits existierende Grossdieselmotoren umzurüsten bzw. nachzurüsten, damit diese auch unter ungünstigen Umgebungsbedingungen, insbesondere unter tropischen Bedingungen, effizient, sicher umweltfreundlich und auch bei Volllast betrieben werden können.

Weitere vorteilhafte Massnahmen und Ausgestaltungen der Erfindung ergeben sich aus den abhängigen Ansprüchen.

Im Folgenden wird die Erfindung sowohl in apparativer als auch in verfahrenstechnischer Hinsicht anhand von Ausführungsbeispielen und anhand der Zeichnung näher erläutert. In der Zeichnung zeigt:

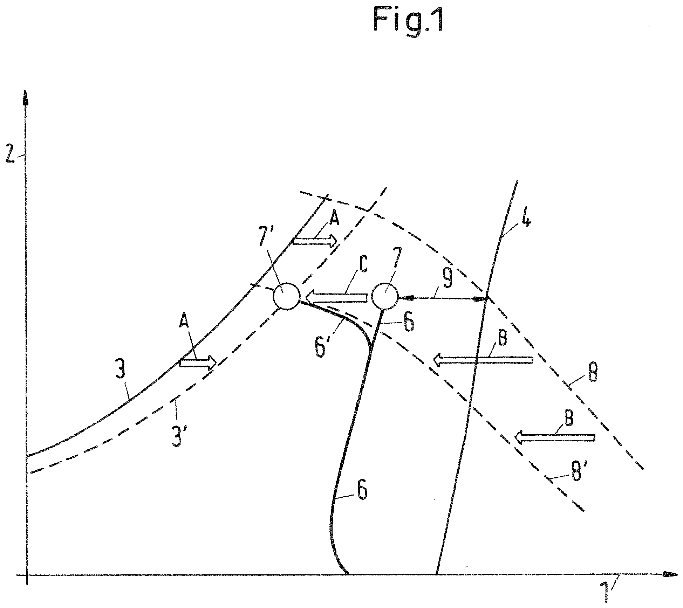

- Fig. 1:: ein schematische Darstellung zur Veranschaulichung der Abhängigkeit des Drehmoments vom Luft-Gas Verhältnis in einem Ausführungsbeispiel eines Dual-Fuel Grossdieselmotors, der im Gasmodus betrieben wird.

Bei der folgenden Beschreibung der Erfindung anhand eines Ausführungsbeispiels wird mit beispielhaftem Charakter auf den für die Praxis besonders wichtigen Fall eines Dual-Fuel Grossdieselmotors Bezug genommen, der als längsgespülter Zweitakt-Grossdieselmotor ausgestaltet ist.

Ein Dual-Fuel Grossdieselmotor ist ein Motor, der mit zwei unterschiedlichen Brennstoffen betrieben werden kann. Im speziellen kann der Grossdieselmotor in einem Flüssigmodus betrieben werden, in welchem nur ein flüssiger Brennstoff in einen Brennraum eines Zylinders eingespritzt wird. Üblicherweise wird der flüssige Brennstoff, beispielsweise Schweröl oder ein Dieselöl zu einem geeigneten Zeitpunkt direkt in den Brennraum eingespritzt und entzündet sich dort nach dem Diesel-Prinzip der Selbstzündung. Der Grossdieselmotor kann aber auch in einem Gasmodus betrieben werden, bei dem ein als Brennstoff dienendes Gas, beispielsweise Erdgas, in Form eines Luft-Gas-Gemisches im Brennraum zur Zündung gebracht wird. Im speziellen arbeitet das hier beschriebene Ausführungsbeispiel des Grossdieselmotor im Gasmodus nach einem Niederdruckverfahren, d.h. das Gas wird im gasförmigen Zustand in den Zylinder eingebracht. Die Vermischung mit der Luft kann dabei im Zylinder selbst erfolgen oder auch schon vor dem Zylinder. Das Luft-Gas-Gemisch wird im Brennraum nach dem Otto-Prinzip fremdgezündet. Diese Fremdzündung wird üblicherweise dadurch bewirkt, dass zu einem geeigneten Moment eine kleine Menge flüssiger Brennstoff in den Brennraum eingebracht wird, der sich dann selbstentzündet und dadurch die Fremdzündung des Luft-Gas-Gemisches verursacht. Natürlich ist es auch möglich, die Fremdzündung elektrisch oder auf einem anderen Wege zu realisieren.

Der Grossdieselmotor kann sowohl als Viertakt-Motor als auch als Zweitaktmotor ausgestaltet sein. Bei dem hier beschriebenen Ausführungsbeispiel ist der Grossdieselmotor als längsgespülter Zweitakt-Grossdieselmotor ausgestaltet, der im Flüssigmodus mit einem Common-Rail System arbeitet.

Der Aufbau und die einzelnen Komponenten eines Grossdieselmotors, wie beispielsweise das Einspritzsystem für den Flüssigmodus, das Gaszuführsystem für den Gasmodus, das Gaswechselsystem, das Abgassystem oder das Turboladersystem für die Bereitstellung der Spül- bzw. Ladeluft, sowie die Kontroll- und Steuerungssystem für einen Grossdieselmotor sind dem Fachmann sowohl für die Ausgestaltung als Zweitaktmotor als auch für die Ausgestaltung als Viertaktmotor hinlänglich bekannt und bedürfen daher hier keiner weiteren Erläuterung.

Bei dem hier beschriebenen Ausführungsbeispiel eines längsgespülten Zweitakt-Grossdieselmotors sind üblicherweise im unteren Bereich eines jeden Zylinders bzw. Zylinderliners Spülluftschlitze vorgesehen, die durch die Bewegung des Kolbens im Zylinder periodisch verschlossen und geöffnet werden, sodass die von dem Turbolader unter einem Ladedruck bereitgestellte Spülluft durch die Spülluftschlitze in den Zylinder einströmen kann, solange diese geöffnet sind. Im Zylinderkopf bzw. im Zylinderdeckel ist ein meistens zentral angeordnetes Auslassventil vorgesehen, durch welches die Verbrennungsgase nach dem Brennprozess aus dem Zylinder in das Abgassystem ausgetragen werden können. Für das Einbringen des flüssigen Brennstoffs sind ein oder mehrere Brennstoffeinspritzdüsen vorgesehen, die beispielsweise im Zylinderkopf in der Nähe des Auslassventils angeordnet sind. Für die Gaszuführung im Gasmodus ist ein Gaszuführsystem vorgesehen, das mindestens ein Gaseinlassventil mit einer Gaseinlassdüse umfasst. Die Gaseinlassdüse ist typischerweise in der Wandung des Zylinders vorgesehen, beispielsweise auf einer Höhe, die etwa in der Mitte zwischen dem oberen und dem unteren Totpunkt des Kolbens liegt.

Ferner wird im Folgenden beispielhaft auf den Anwendungsfall Bezug genommen, dass der Grossdieselmotor das Antriebsaggregat eines Schiffes ist.

Aufgrund der gesetzlichen Bestimmungen bezüglich der Abgaswerte müssen heute Grossdieselmotoren in Küstennähe häufig im Gasmodus betrieben werden, weil sonst die vorgeschriebenen Grenzwerte für den Abgasausstoss, insbesondere sind dies Stickoxide NOₓ und Schwefeloxide, nicht mehr eingehalten werden können.

Im Gasmodus sind die Effizienz und die möglichst schadstoffarme Verbrennung des Luft-Gas-Gemisches ganz empfindlich von dem Verhältnis der Menge an Luft und der Menge an Gas abhängig. Dieses Verhältnis wird üblicherweise durch den λ-Wert angegeben, welcher das Verhältnis aus der Masse der für die Verbrennung zur Verfügung stehenden Luft und der Masse des Gases angibt, welches als Brennstoff verwendet wird.

Das optimale Luft-Gas-Verhältnis hängt von dem vom Motor zu generierenden Antriebsdrehmoment ab und damit von der gewünschten Geschwindigkeit des Schiffes.

Fig. 1 zeigt in einer schematischen Darstellung einen beispielhaften Zusammenhang zwischen dem Luft-Gas-Verhältnis 1 und dem vom Motor generierten Drehmoment 2, welches das Schiff antreibt. Im speziellen ist das in Fig. 1 dargestellte Drehmoment 2 das BMEP (Brake Mean Effective Pressure) Drehmoment, was im Wesentlichen ein über einen Arbeitszyklus (eine Periode der Kolbenbewegung für Zweitakt-Maschinen und zwei Perioden der Kolbenbewegung für Viertakt-Maschinen) gemitteltes Drehmoment ist.

In der Darstellung in Fig. 1 sind zwei Grenzkurven zu sehen, nämlich eine Klopfgrenze (knocking limit) 3 und eine Zündaussetzgrenze (misfiring-limit) 4. Bei Betriebszuständen, die sich darstellungsgemäss links der Klopfgrenze 3 befinden, ist das Luft-Gas-Gemisch zu fett, das heisst es ist zu wenig Luft im Gemisch. Ein zu fettes Gemisch kann zu verschiedenen Problemen führen, nämlich dass die Verbrennung zu schnell abläuft (fast combustion), oder dass der Motor zu klopfen beginnt oder dass das Gemisch im Zylinder dann üblicherweise durch Selbstzündung aufgrund des zu hohen Gehalts an Gas zu früh (bezogen auf den Arbeitszyklus) zu verbrennen beginnt (pre-ignition). Bei Betriebszuständen, die darstellungsgemäss rechts der Zündaussetzgrenze 4 liegen, ist das Luft-Gas-Gemisch zu mager, das heisst es ist nicht genügend Gas für eine optimale Verbrennung im Brennraum vorhanden.

Daher ist man bemüht, den Grossdieselmotor im Gasmodus stets in einem optimalen Bereich für das Luft-Gas-Verhältnis zu betreiben, also in einem Bereich, der zwischen der Klopfgrenze 3 und der Zündaussetzgrenze 4 liegt. In Fig. 1 ist die Betriebslinie 6 eingezeichnet, welche den Zusammenhang zwischen dem Luft-Gas-Verhältnis 1 und dem vom Motor generierten Drehmoment 2 angibt. Das Ende dieser Betriebslinie 6 entspricht dem Drehmoment, welches der Grossdieselmotor bei Volllast generiert, das heisst der mit dem Bezugszeichen 7 bezeichnete Punkt repräsentiert den Volllastbetrieb, also den Betrieb, in welchem der Grossdieselmotor mit 100% Last betrieben wird. Folgt man ausgehend vom Punkt 7 der Betriebslinie 6 darstellungsgemäss abwärts, so durchläuft man den Teillastbereich bis hinab zum Niederlastbereich und dem Beginn der Betriebslinie 6 auf der horizontalen Achse, die das Luft-Gas-Verhältnis angibt. Die Betriebslinie 6 bewegt sich beispielsweise in einem Bereich zwischen einem Luft-Gas-Verhältnis von zwei und einem Luft-Gas-Verhältnis von 3. In Fig. 1 entspricht der Beginn der Betriebslinie 6 beispielsweise einem Luft-Gas-Verhältnis von 2.5.

Die bisher beschriebenen Kurven, nämlich die Klopfgrenze 3, die Zündaussetzgrenze 4 und die Betriebslinie 6 beziehen sich jeweils auf die ISO-Bedingungen, also die genormten Bedingungen, auf die sich die technischen Spezifikationen des Grossdieselmotors beziehen. So beziehen sich die genannten Kurven 3, 4, 6 insbesondere auf eine Lufttemperatur von 25° C. Mit der Lufttemperatur ist dabei die Temperatur der Umgebungsluft gemeint, bzw. die Temperatur der vom Turbolader angesaugten Umgebungsluft.

In Fig. 1 ist ferner eine Kennlinie 8 des Turboladers angegeben, die sich ebenfalls auf eine Temperatur der angesaugten Umgebungsluft von 25°C bezieht. Diese Kennlinie 8 repräsentiert den maximalen Massenstrom an Luft, den der Turbolader als Spülluft zur Verfügung stellen kann, in Abhängigkeit vom Drehmoment 2, also von der Last, bei welcher der Grossdieselmotor betrieben wird. Befindet man sich darstellungsgemäss links der Kennlinie 8 so kann der Turbolader einen ausreichenden Massenstrom an Spülluft generieren, um den gewünschten Wert des Luft-Gas-Verhältnisses 1 im Zylinder zu realisieren. Überschreitet man die Kennlinie 8 und kommt in den Bereich darstellungsgemäss rechts der Kennlinie 8, so reicht der vom Turbolader generierte Massenstrom an Spülluft nicht mehr aus, um das gewünschte Luft-Gas-Verhältnis im Zylinder zu realisieren.

Wie dies in Fig. 1 gut zu erkennen ist, gibt es bei ISO-Bedingungen, also insbesondere bei 25°C auch im Volllastbetrieb, der durch Punkt 7 repräsentiert ist, einen genügenden Abstand von der Kennlinie 8 des Turboladers, der üblicherweise als Waste-Gate-Margin bezeichnet wird, und in Fig. 1 durch den Doppelpfeil 9 repräsentiert wird. Wird der Grossdieselmotor am Punkt 7 also mit 100% Last (Volllast) betrieben, so stellt der Waste-Gate-Margin einen Sicherheitsabstand von der Kennlinie 8 des Turboladers da, der gewährleistet, dass die vom Turbolader bereitgestellte Spülluft auf jeden Fall ausreicht, um den gewünschten Wert für das Luft-Gas-Verhältnis im Zylinder zu realisieren.

In der Praxis ist im Abgassystem des Grossdieselmotors ein spezielles Ventil vorgesehen, das als Waste-Gate-Ventil bezeichnet wird, und mit dem der Massenstrom des Abgases, der dem Turbolader zugeführt wird, einstellbar ist. Ist das Waste-Gate Ventil ganz oder teilweise geöffnet, so wird ein Teil des Abgases am Turbolader vorbeigeführt, sodass dieser nicht seine maximal mögliche Leistung erbringt. Ist das Waste-Gate-Ventil komplett geschlossen, so wird der gesamte Massenstrom des Abgases dem Turbolader zugeführt, der dann mit seiner maximal möglichen Leistung arbeitet, also den maximal möglichen Massenstrom an Spülluft generiert.

Wird der Grossdieselmotor im Gasbetrieb unter tropischen Bedingungen betrieben, so führt dies zu einigen Änderungen in Fig. 1, die nachfolgend beschrieben werden. Mit tropischen Bedingungen sind dabei solche Bedingungen gemeint, die sich durch eine hohe Temperatur und/oder eine hohe Luftfeuchtigkeit der Umgebungsluft - und damit der vom Turbolader angesaugten Luft - auszeichnen. Mit hoher Temperatur ist damit eine Temperatur von mindestens 27°C gemeint. Unter tropischen Bedingungen kann die Temperatur der Umgebungsluft aber durchaus auch 30°C oder 35°C überschreiten und beispielsweise 45° sein. Mit dieser Temperatur ist die Temperatur der Luft am Eingang des Turboladers gemeint. Unter einer hohen Luftfeuchtigkeit wird eine relative Feuchte der Umgebungsluft von mindestens 40% verstanden, insbesondere von mindestens 50%. Die Luftfeuchtigkeit kann aber durchaus 60% oder noch mehr betragen.

Insbesondere auch die Kombination aus hoher Luftfeuchtigkeit und hoher Temperatur der vom Turbolader angesaugten Luft führt zu Problemen, weil die hohe Temperatur eine geringere Dichte der Luft bedeutet und dadurch der Massenstrom der Luft, die durch den Turbolader strömt, reduziert wird. Die hohe Luftfeuchtigkeit führt zu einer verstärkten Kondensation von Wasser oder Dampf, insbesondere stromabwärts des Ladeluftkühlers.

Die Auswirkungen der tropischen Bedingungen sind qualitativ in Fig. 1 dargestellt, wobei die mit einem Hochkomma versehenen Bezugszeichen den Betrieb des Grossdieselmotors unter tropischen Bedingungen bezeichnen.

Ein Effekt der tropischen Bedingungen ist es, dass sich die Klopfgrenze 3 darstellungsgemäss nach rechts zu einer tropischen Klopfgrenze 3' verschiebt, wie dies durch die Pfeile A angedeutet ist. Diese Verschiebung ist insbesondere durch die erhöhte Temperatur der Spülluft und durch einen erhöhten Anteil des Abgases, der nach der Verbrennung im Brennraum des Zylinders verbleibt, verursacht.

Die Kennlinie 8 des Turboladers verschiebt sich darstellungsgemäss nach unten zu der tropischen Kennlinie 8` wie dies die Pfeile B in Fig. 1 andeuten. Dies liegt hauptsächlich daran, wie bereits erwähnt, dass die hohe Temperatur der angesaugten Luft eine kleinere Dichte der Luft bedeutet, und dass es verstärkt zu Kondensation kommt.

Die Betriebslinie 6 des Grossdieselmotors bleibt im unteren Lastbereich und im Teillastbereich im Wesentlichen unverändert. Aber im oberen Lastbereich - in Fig. 1 oberhalb etwa 80% der Vollast - kommt es zu einem ausgeprägten Knick, darstellungsgemäss nach links, wie dies durch die tropische Betriebslinie 6' dargestellt ist. Somit verschiebt sich der Punkt 7, welcher den Vollastbetrieb (100% Last) unter ISO-Bedingungen darstellt, zu dem tropischen Punkt 7', der den Volllastbetrieb unter tropischen Bedingungen darstellt. Diese Verschiebung ist in Fig. 1 durch den Pfeil C angedeutet.

Bei dem in Fig. 1 dargestellten Ausführungsbeispiel ist unter tropischen Bedingungen ein Betrieb unter Volllast (Punkt 7') gerade noch möglich, obwohl der Betrieb nicht mehr optimal ist. Es ist zu erkennen, dass der tropische Punkt 7' (Vollast) sowohl auf der tropischen Klopfgrenze 3' als auch auf der tropischen Kennlinie 8' des Turboladers liegt. Ein weiteres Absinken der tropischen Kennlinie 8' bzw. eine weitere Rechtsverschiebung der tropischen Klopfgrenze 7' würde dazu führen, dass der Grossdieselmotor nicht mehr mit Volllast betrieben werden kann, ohne in den Bereich der schnellen Verbrennung zu gelangen.

Erfindungsgemäss wird deshalb vorgeschlagen, den Grossdieselmotor im Gasbetrieb in einem Leistungsausgleichsmodus zu betreiben, wenn solche kritischen Bedingungen auftreten, also insbesondere auch unter tropischen Umgebungsbedingungen. Erfindungsgemäss wird dieser Leistungsausgleichsmodus aktiviert, wenn ein Kontrollparameter, anhand dessen Änderungen im Luft-Gas-Verhältnis erkennbar sind, einen Grenzwert erreicht.

Ein bevorzugter Kontrollparameter ist der Zylinderdruck, der auch als Zünddruck bezeichnet wird. Dies ist der Druck der im Brennraum des Zylinders herrscht, wenn das Luft-Gas-Gemisch verbrennt. Genauer gesagt ist der Zylinderdruck oder der Zünddruck der maximale Druck, der über den Arbeitszyklus gesehen im Zylinder auftritt. Verschiebt sich beispielsweise das Luft-Gas-Verhältnis zu kleineren Werten, so führt dies in der Regel zu einer schnelleren Verbrennung im Brennraum. Die erhöhte Verbrennungsgeschwindigkeit führt zu einem höheren Zylinderdruck, sodass anhand des Zylinderdrucks eine Änderung des Luft-Gas-Verhältnisses im Zylinder erkennbar ist.

Verwendet man den Zylinderdruck als Kontrollparameter, so ist der Grenzwert des Kontrollparameters vorzugsweise, aber nicht notwendigerweise, der Auslegedruck des Zylinders, also der in normalen Betrieb maximal zulässige Druck im Zylinder. Dieser Auslegedruck liegt bei längsgespülten Zweitakt-Grossdieselmotoren typischerweise zwischen 150 bar und 200 bar, beispielsweise bei 180 bar.

Wird nun im Betrieb des Grossdieselmotors im oberen Lastbereich von mindestens 75% der Volllast, vorzugsweise von mindestens 85% der Volllast detektiert, dass der Zylinderdruck den Grenzwert erreicht, so wird der Leistungsausgleichsmodus aktiviert, um sicherzustellen, dass der Grossdieselmotor nicht im Luftmangelbereich -also darstellungsgemäss links der tropischen Klopfgrenze 3' -betrieben wird.

Natürlich sind auch andere Kontrollparameter geeignet, anhand derer erkannt wird, wenn der Leistungsausgleichsmodus aktiviert werden soll. Auch ist es möglich, mehr als einen Kotrollparameter zu überwachen. Bevorzugte und geeignete Kontrollparameter sind beispielsweise auch die folgenden Parameter: die Verbrennungsgeschwindigkeit im Zylinder, das Verhältnis aus Zylinderdruck und Kompressionsdruck, die Verbrennungsgeschwindigkeit, die Stellung des Waste-Gate-Ventils für den Turbolader, die Temperatur der angesaugten Luft am Eingang des Turboladers, die Feuchtigkeit der angesaugten Luft am Eingang des Turboladers, die Temperatur der Spülluft, die in den Zylinder eingebracht wird, der aktuelle Druck der Spülluft, die Sauerstoffkonzentration im Abgas, die Stickoxidkonzentration im Abgas. Für den jeweiligen Kontrollparameter geignete Grenzwerte können beispielsweise berechnet oder durch Simulationen ermittelt werden, oder experimentell oder anhand empirischer Daten bestimmt werden.

Das Verhältnis aus Zylinderdruck und Kompressionsdruck ist das Verhältnis aus dem maximal herrschenden Druck im Zylinder während eines Arbeitszyklus' und dem Druck (Kompressionsdruck), der im Zylinder unmittelbar vor der Zündung des Luft-Gas-Gemisches herrscht.

Die Stellung des Waste-Gate-Ventils bezeichnet die Öffnungsstellung des Waste-Gate-Ventils. Ist das Waste-Gate-Ventil vollständig geöffnet, so wird der maximal mögliche Anteil der Abgase aus den Zylindern am Turbolader vorbei geleitet (minimaler Massenstrom der vom Turbolader generierten Spülluft), ist das Waste-Gate-Ventil vollständig geschlossen, so werden die gesamten Abgase aus den Zylindern an den Turbolader geleitet, sodass dieser seine maximale Leistung bringt, d.h. den maximalen Massenstrom an Spülluft.

Eine weitere bevorzugte, weil besonders einfache, Ausführungsform ist es, wenn der Leistungsausgleichsmodus aktiviert wird, wenn die Temperatur der von dem Turbolader angesaugten Luft eine Grenztemperatur überschreitet, und der Grossdieselmotor in einem oberen Lastbereich von mindestens 75% Last, vorzugsweise mindesten 85% Last, jeweils bezogen auf die Volllast, betrieben wird. Die Grenztemperatur beträgt mindestens 27° Celsius, kann aber beispielsweise auch 30°C oder 35°C oder 45°C oder noch mehr betragen.

Eine weitere Variante besteht darin, dass der Leistungsausgleichsmodus aktiviert wird, wenn die relative Feuchtigkeit der von dem Turbolader angesaugten Luft eine Grenzfeuchtigkeit überschreitet, und der Grossdieselmotor in einem oberen Lastbereich von mindestens 75% Last, vorzugsweise mindesten 85% Last, jeweils bezogen auf die Volllast, betrieben wird. Die Grenzfeuchtigkeit beträgt mindestens 40%, vorzugsweise mindestens 60%. Auch dies stellt eine besonders einfach zu realisierende Massnahme dar.

Erfindungsgemäss wird im Leistungsausgleichsmodus das Luft-Gas-Verhältnis für die Verbrennung des Gases erhöht. Bevor der Leistungsausgleichsmodus aktiviert wird, hat sich ja der Kontrollparameter seinem Grenzwert genähert und diesen erreicht, woran erkennbar ist, dass das Gas-Luft-Verhältnis im Zylinder abgesunken ist, man sich also der tropischen Klopfgrenze (Fig. 1) nähert. Wird nun der Leistungsausgleichsmodus aktiviert, so wird das Luft-Gas-Verhältnis für die Verbrennung des Gases gezielt erhöht.

Dazu ist es eine besonders bevorzugte Massnahme im Leistungsausgleichsmodus eine Zusatzmenge des flüssigen Brennstoffs zusätzlich zu dem Gas in den Brennraum einzubringen. Durch diese Massnahme lässt sich nämlich in besonders einfacher Weise das Luft-Gas-Verhältnis für die Verbrennung des Gases erhöhen. Weil ein Teil der benötigten Leistung des Motors durch die Verbrennung des flüssigen Brennstoffs generiert wird, reduziert sich die Menge an Gas, die für den jeweiligen Gasverbrennungsprozess benötigt wird. Durch diese Reduzierung der Gasmenge lässt sich das Luft-Gas-Verhältnis für die Gasverbrennung erhöhen.

Da es apparativ besonders einfach ist, wird vorzugsweise die Zusatzmenge des flüssigen Brennstoffs mittels einer Einspritzvorrichtung in den Zylinder eingebracht, welche im Flüssigmodus des Grossdieselmotors verwendet wird. Das heisst der flüssige Brennstoff wird mit den gleichen Einspritzdüsen in den Brennraum des Zylinders eingespritzt, mit denen der flüssige Brennstoff auch im Flüssigmodus eingespritzt wird.

Natürlich ist es wünschenswert und auch möglich, dass durch den im Gasbetrieb zusätzlich eingespritzen flüssigen Brennstoff die Schadstoffemissionen des Grossdieselmotors nicht wesentlich erhöht werden. Aus diesem Grunde wird vorzugsweise die Zusatzmenge des flüssigen Brennstoffs möglichst klein gewählt. Überraschenderweise hat sich in der Praxis gezeigt, dass sich durch das Einspritzen der Zusatzmenge sogar eine Erniedrigung der Schadstoffemissionen erzielen lässt

Für die Einspritzung der Zusatzmenge des flüssigen Brennstoffs ist es bevorzugt, wenn zunächst eine minimale Zusatzmenge des flüssigen Brennstoffs in den Zylinder eingebracht wird, und die Zusatzmenge dann schrittweise erhöht wird, bis die gewünschte Last des Grossdieselmotors erreicht ist. Das heisst, bei Aktivierung des Leistungsausgleichsmodus wird zunächst diese minimale Zusatzmenge des flüssigen Brennstoffs zusätzlich zu dem Gas in den Zylinder eingebracht. Sollte diese minimale Zusatzmenge nicht ausreichen, um die gewünschte Last des Motors zu realisieren, ohne dass die Gefahr der zu schnellen Gasverbrennung (Luftmangelbereich, links der tropischen Klopfgrenze 3' in Fig. 1) besteht, so wird in den nächsten Arbeitszyklen des Zylinders die Zusatzmenge des flüssigen Brennstoffs schrittweise erhöht, bis die gewünschte Last des Motors erreicht ist.

Um eine deutliche Zunahme der Schadstoffemission zu verhindern, ist es wie bereits erwähnt bevorzugt, wenn die Zusatzmenge des flüssigen Brennstoffs so klein wie möglich bzw. in einem optimalen Bereich gehalten wird, und insbesondere höchstens 20 Gewichtsprozent, vorzugsweise höchstens 15 Gewichtsprozent, der Gesamtmenge des in den Zylinder eingebrachten Brennstoffs beträgt.

Eine geeignete Zusatzmenge hängt natürlich vom speziellen Anwendungsfall ab. Es hat sich aber in der Praxis gezeigt, dass es für sehr viele Anwendungen ausreichend ist, wenn die Zusatzmenge des flüssigen Brennstoffs im Bereich von etwa 5 bis 10 Gewichtsprozent der Gesamtmenge des in den Zylinder eingebrachten Brennstoffs liegt. Mit dieser Zusatzmenge kann der Grossdieselmotor üblicherweise auch unter tropischen Bedingungen im Gasmodus mit Volllast betreiben werden. Insbesondere hat sich gezeigt, dass mit dieser Zusatzmenge an flüssigem Brennstoff sogar eine Reduzierung der Schadstoffemissionen erzielt werden kann.

Eine weitere bevorzugten Möglichkeit, um im Leistungsausgleichsmodus das Luft-Gas-Verhältnis für die Verbrennung des Gases zu erhöhen, besteht darin, im Leistungsausgleichsmodus ein Gebläse zu aktivieren, mit welchem eine zusätzliche Menge an Spülluft generiert wird. Durch diese Massnahme lässt sich im Leistungsausgleichsmodus zusätzlich zu dem von dem Turbolader gelieferten Massenstrom an Spülluft mehr Spülluft generieren, wodurch das Luft-Gas-Verhältnis für die Verbrennung des Gases im Zylinder erhöht wird. Auch durch diese Massnahme ist es möglich, den Grossdieselmotor im Gasmodus selbst bei ungünstigen Umgebungsbedingungen, insbesondere tropischen Bedingungen, mit Volllast zu betreiben.

Vorzugsweise ist dabei das Gebläse ein regelbares Gebläse, mit welchen die zusätzliche Menge an Spülluft veränderbar ist. Durch das regelbare Gebläse kann das Luft-Gas-Verhältnis für die Gasverbrennung kontinuierlich vergrössert bzw. angepasst werden, sodass die Verbrennung des Gases unter den Aspekten eines möglichst geringen Verbrauchs und einer möglichst geringen Schadstoffemission optimiert werden kann.

Vorzugsweise ist das Gebläse in Serie mit einem Kompressor eines Turboladers angeordnet. Das Gebläse reduziert dabei die Druckdifferenz über den Kompressor des Turboladers, wodurch der Massenstrom der Spülluft erhöht wird. Besonders bevorzugt ist bei der seriellen Anordnung, wenn das Gebläse hochdruckseitig, also in Strömungsrichtung gesehen hinter dem Kompressor angeordnet ist.

Es ist auch möglich, alternativ oder ergänzend ein Gebläse einzusetzen, das parallel zu dem Kompressor des Turboladers angeordnet ist.

Die beiden beschriebenen Massnahmen zur Erhöhung des Luft-Gas-Verhältnisses im Leistungsausgleichsmodus, nämlich das Einspritzen einer Zusatzmenge des flüssigen Brennstoffs und das Aktivieren eines zusätzlichen Gebläses, können sowohl alternativ als auch gemeinsam realisiert werden.

Das erfindungsgemässe Verfahren ist insbesondere auch zur Nachrüstung eines Dual-Fuel Grossdieselmotors geeignet. Da sich das erfindungsgemässe Verfahren in sehr vielen Fällen ohne grösseren zusätzlichen apparativen Aufwand realisieren lässt, ist es insbesondere auch dafür geeignet, bereits existierende Grossdieselmotoren umzurüsten bzw. nachzurüsten, damit diese auch unter ungünstigen Umgebungsbedingungen, insbesondere unter tropischen Bedingungen, effizient, sicher umweltfreundlich und auch bei Volllast betrieben werden können.

Das erfindungsgemässe Verfahren ist insbesondere auch im Hinblick auf Testläufe vorteilhaft, die beispielsweise mit dem Grossdieselmotor durchgeführt werden, bevor er in den Servicebetrieb geht, denn gerade in diesen Tests muss der Grossdieselmotor auch mit Volllast, also mit 100% seiner Last betrieben werden.

## Patentansprüche

1. Verfahren zum Betreiben eines Dual-Fuel Grossdieselmotors, insbesondere eines längsgespülten Zweitakt-Grossdieselmotors, der in einem Flüssigmodus betreibbar ist, in welchem ein flüssiger Brennstoff zur Verbrennung in einen Zylinder eingebracht wird, und der ferner in einem Gasmodus betreibbar ist, in welchem ein Gas als Brennstoff in den Zylinder eingebracht wird, das Gas mit Spülluft vermischt wird und bei einem Luft-Gas-Verhältnis verbrannt wird, wobei während des Betriebs im Gasmodus ein Kontrollparameter überwacht wird, anhand dessen Änderungen des Luft-Gas-Verhältnisses erkennbar sind, und wobei der Grossdieselmotor in einem Leistungsausgleichsmodus betrieben wird, falls der Kontrollparameter einen Grenzwert erreicht, wobei in dem Leistungsausgleichsmodus das Luft-Gas-Verhältnis für die Verbrennung des Gases erhöht wird, wobei im Leistungsausgleichsmodus eine Zusatzmenge des flüssigen Brennstoffs zusätzlich zu dem Gas in den Brennraum eingebracht wird.

2. Verfahren nach Anspruch 1, wobei der Kontrollparameter zur Aktivierung des Leistungsausgleichsmodus mindestens einen der folgenden Parameter umfasst: Zylinderdruck, Verhältnis aus Zylinderdruck und Kompressionsdruck, Verbrennungsgeschwindigkeit, Temperatur der angesaugten Luft am Eingang eines Turboladers zur Bereitstellung der Spülluft, Stellung des Waste-Gate-Ventils für einen Turbolader, Feuchtigkeit der angesaugten Luft am Eingang eines Turboladers zur Bereitstellung der Spülluft, Temperatur der Spülluft, die in den Zylinder eingebracht wird, aktueller Druck der Spülluft, Sauerstoffkonzentration im Abgas, Stickoxidkonzentration im Abgas.

3. Verfahren nach einem der vorangehenden Ansprüche, wobei der Kontrollparameter zur Aktivierung des Leistungsausgleichsmodus der Zylinderdruck bei der Verbrennung des Luft-Gas-Gemisches ist.

4. Verfahren nach Anspruch 3, bei welchem der Grenzwert für den Kontrollparameter der Auslegedruck des Zylinders ist.

5. Verfahren nach einem der vorangehenden Ansprüche, wobei der Leistungsausgleichsmodus aktiviert wird, wenn die Temperatur der von einem Turbolader angesaugten Luft eine Grenztemperatur überschreitet, wobei die Grenztemperatur mindestens 27° Celsius beträgt.

6. Verfahren nach einem der vorangehenden Ansprüche, wobei der Leistungsausgleichsmodus aktiviert wird, wenn die relative Feuchtigkeit der von einem Turbolader angesaugten Luft eine Grenzfeuchtigkeit überschreitet, wobei die Grenzfeuchtigkeit mindestens 40%, vorzugsweise mindestens 60%, beträgt.

7. Verfahren nach einem der vorangehenden Ansprüche, bei welchem die Zusatzmenge des flüssigen Brennstoffs mittels einer Einspritzvorrichtung in den Zylinder eingebracht wird, welche im Flüssigmodus des Grossdieselmotors verwendet wird.

8. Verfahren nach einem der vorangehenden Ansprüche, bei welchem zunächst eine minimale Zusatzmenge des flüssigen Brennstoffs in den Zylinder eingebracht wird, und die Zusatzmenge dann schrittweise erhöht wird, bis die gewünschte Last des Grossdieselmotors erreicht ist.

9. Verfahren nach einem der vorangehenden Ansprüche, bei welchen die Zusatzmenge des flüssigen Brennstoffs höchstens 20 Gewichtsprozent, vorzugsweise höchstens 15 Gewichtsprozent, der Gesamtmenge des in den Zylinder eingebrachten Brennstoffs beträgt.

10. Verfahren nach einem der vorangehenden Ansprüche, bei welchem die Zusatzmenge des flüssigen Brennstoffs im Bereich von etwa 5 bis 10 Gewichtsprozent der Gesamtmenge des in den Zylinder eingebrachten Brennstoffs liegt.

11. Verfahren nach einem der vorangehenden Ansprüche, wobei im Leistungsausgleichsmodus ein Gebläse aktiviert wird, mit welchem eine zusätzliche Menge an Spülluft generiert wird.

12. Verfahren nach Anspruch 11, wobei das Gebläse ein regelbares Gebläse ist, mit welchen die zusätzliche Menge an Spülluft veränderbar ist.

13. Verfahren nach einem der Ansprüche 11 oder 12, wobei das Gebläse in Serie mit einem Kompressor eines Turboladers angeordnet ist.

14. Dual-Fuel Grossdieselmotor, insbesondere längsgespülter Zweitakt-Grossdieselmotor, eingerichtet um mit einem Verfahren gemäss einem der Ansprüche 1 bis 13 betrieben zu werden.

## Claims

1. Method for operating a dual-fuel large diesel engine, in particular a longitudinally scavenged two-stroke large diesel engine, which can be operated in a liquid mode in which a liquid fuel is introduced into a cylinder for combustion and which can also be operated in a gas mode in which a gas as fuel is introduced into the cylinder, the gas is mixed with scavenging air and combusted at an air-gas-ratio, wherein during operation in gas mode a control parameter is monitored which allows detecting changes in the air-gas ratio, and wherein the large diesel engine is operated in a power balance mode, if the control parameter reaches a limit value, wherein in the power balance mode the air-gas ratio is increased for the combustion of gas, wherein in the power balance mode an additional amount of liquid fuel is introduced in addition to the gas into the combustion chamber.

2. Method according to claim 1, wherein the control parameter for activating the power balance mode comprises at least one of the following parameters: cylinder pressure, ratio between cylinder pressure and compression pressure, speed of combustion, temperature of the air sucked in at the inlet of a turbocharger for providing scavenging air, position of the waste-gate valve for a turbocharger, humidity of the air sucked in at the inlet of a turbocharger for providing scavenging air, temperature of the scavenging air introduced into the cylinder, current pressure of the scavenging air, oxygen concentration in exhaust gases, nitrogen oxide concentration in exhaust gases.

3. Method according to one of the preceding claims, wherein the control parameter for activating the power balance mode is the cylinder pressure during the combustion of the air-gas mixture.

4. Method according to claim 3, wherein the limit value for the control parameter is the design pressure of the cylinder.

5. Method according to one of the preceding claims, wherein the power balance mode is activated, if the temperature of the air sucked in by a turbocharger exceeds a limit temperature, wherein the limit temperature is at least 27°C.

6. Method according to one of the preceding claims, wherein the power balance mode is activated, if the relative humidity of the air sucked in by a turbocharger exceeds a limit humidity, wherein the limit humidity is at least 40%, preferably at least 60%.

7. Method according to one of the preceding claims, wherein the additional amount of liquid fuel is introduced into the cylinder by means of an injection device used in the liquid mode of the large diesel engine.

8. Method according to one of the preceding claims, wherein first a minimum additional amount of liquid fuel is introduced into the cylinder and then the additional amount is increased step by step until the desired load of the large diesel engine is reached.

9. Method according to one of the preceding claims, wherein the additional amount of liquid fuel is not more than 20% by weight, preferably not more than 15% by weight, of the total amount of fuel introduced into the cylinder.

10. Method according to one of the preceding claims, wherein the additional amount of liquid fuel is in the range of about 5 to 10% by weight of the total amount of fuel introduced into the cylinder.

11. Method according to one of the preceding claims, wherein in the power balance mode a blower is activated which helps to generate an additional amount of scavenging air.

12. Method according to claim 11, wherein the blower is an adjustable blower which helps to modify the additional amount of scavenging air.

13. Method according to one of the claims 11 or 12, wherein the blower in series is arranged with a compressor of a turbocharger.

14. Dual-fuel large diesel engine, in particular longitudinally scavenged two-stroke large diesel engine, configured to be operated by a method according to any one of the claims 1 to 13.

## Revendications

1. Procédé pour faire fonctionner un gros moteur diesel bi-carburant, en particulier un gros moteur diesel à deux temps à purge longitudinale, qui peut fonctionner dans un mode liquide, dans lequel un combustible liquide est introduit dans un cylindre pour la combustion, et qui peut en outre fonctionner dans un mode gaz, dans lequel un gaz est introduit dans le cylindre en tant que combustible, le gaz est mélangé avec de l'air de purge et brûlé à un rapport air-gaz, dans lequel, pendant le fonctionnement en mode gaz, un paramètre de contrôle est surveillé, à l'aide duquel des modifications du rapport air-gaz peuvent être détectées, et dans lequel le gros moteur diesel fonctionne dans un mode de compensation de puissance si le paramètre de contrôle atteint une valeur limite, dans lequel, dans le mode de compensation de puissance, le rapport air-gaz pour la combustion du gaz est augmenté, dans lequel, dans le mode de compensation de puissance, une quantité supplémentaire de combustible liquide est introduite dans la chambre de combustion en plus du gaz.

2. Procédé selon la revendication 1, dans lequel le paramètre de contrôle pour l'activation du mode de compensation de puissance comprend au moins l'un des paramètres suivants : la pression du cylindre, le rapport entre la pression du cylindre et la pression de compression, la vitesse de combustion, la température de l'air aspiré à l'entrée d'un turbocompresseur pour fournir l'air de purge, la position de la soupape Waste-Gate pour un turbocompresseur, l'humidité de l'air aspiré à l'entrée d'un turbocompresseur pour fournir l'air de purge, la température de l'air de purge introduit dans le cylindre, la pression actuelle de l'air de purge, la concentration d'oxygène dans les gaz d'échappement, la concentration d'oxyde d'azote dans les gaz d'échappement.

3. Procédé selon l'une quelconque des revendications précédentes, dans lequel le paramètre de contrôle pour l'activation du mode de compensation de puissance est la pression de cylindre lors de la combustion du mélange air-gaz.

4. Procédé selon la revendication 3, dans lequel la valeur limite du paramètre de contrôle est la pression nominale du cylindre.

5. Procédé selon l'une quelconque des revendications précédentes, dans lequel le mode de compensation de puissance est activé lorsque la température de l'air aspiré par un turbocompresseur dépasse une température limite, la température limite étant d'au moins 27° Celsius.

6. Procédé selon l'une quelconque des revendications précédentes, dans lequel le mode de compensation de puissance est activé lorsque l'humidité relative de l'air aspiré par un turbocompresseur dépasse une humidité limite, l'humidité limite étant d'au moins 40%, de préférence d'au moins 60%.

7. Procédé selon l'une quelconque des revendications précédentes, dans lequel la quantité supplémentaire de combustible liquide est introduite dans le cylindre au moyen d'un dispositif d'injection utilisé dans le mode liquide du gros moteur diesel.

8. Procédé selon l'une quelconque des revendications précédentes, dans lequel une quantité supplémentaire minimale de combustible liquide est d'abord introduite dans le cylindre, et la quantité supplémentaire est ensuite augmentée progressivement jusqu'à ce que la charge souhaitée du gros moteur diesel est atteinte.

9. Procédé selon l'une quelconque des revendications précédentes, dans lequel la quantité supplémentaire de combustible liquide est au plus égale à 20 % en poids, de préférence au plus égale à 15 % en poids, de la quantité totale de combustible introduite dans le cylindre.

10. Procédé selon l'une quelconque des revendications précédentes, dans lequel la quantité supplémentaire de combustible liquide est comprise dans la plage d'environ 5 à 10 % en poids de la quantité totale de combustible introduite dans le cylindre.

11. Procédé selon l'une quelconque des revendications précédentes, dans lequel, en mode de compensation de puissance, un ventilateur est activé, avec lequel une quantité supplémentaire d'air de purge est généré.

12. Procédé selon la revendication 11, dans lequel le ventilateur est un ventilateur réglable avec lequel la quantité supplémentaire d'air de purge peut être modifiée.

13. Procédé selon l'une quelconque des revendications 11 ou 12, dans lequel le ventilateur est disposé en série avec un compresseur d'un turbocompresseur.

14. Gros moteur diesel bi-carburant, en particulier un gros moteur diesel à deux temps à purge longitudinale, conçu pour fonctionner avec un procédé selon l'une quelconque des revendications 1 à 13.
